# EUROPÄISCHE PATENTANMELDUNG

(11) **EP 2 036 761 A1**
(43) Veröffentlichungstag der Anmeldung: **18.03.2009**
(21) Anmeldenummer: 08104831.6
(22) Anmeldetag: 22.07.2008
(51) Int. Cl.: B60K 37/06, B60Q 3/04, G02B 6/00

(54) **Verbesserte Beleuchtung für Stellknopf eines Anzeigeinstruments**

(30) Priorität: 17.09.2007 DE 102007044360
(71) Anmelder: ROBERT BOSCH GMBH, 70442 Stuttgart (DE)
(72) Erfinder: Schach, Harald, 71287, Weissach (DE)

(57) **Zusammenfassung**

Die vorliegende Erfindung betrifft ein Anzeigeinstrument (1) in der Form eines Kombiinstruments oder eines Zentraldisplays für die Instrumententafel eines Kraftfahrzeugs, umfassend eine Displayeinrichtung (3) und mindestens einen Stellknopf (11) zur Bedienung des Anzeigeinstruments (1), sowie mindestens eine Lichtquelle (7) zur Beleuchtung der Displayeinrichtung (3), wobei mindestens ein Lichtleitelement (17) vorgesehen und derart angeordnet ist, dass zumindest ein Teilbereich (22) des Stellknopfes (11) durch das von der mindestens einen Lichtquelle (7) erzeugbare und von dem Lichtleitelement (17) weiterleitbare Licht (10) beleuchtbar ist.

## Beschreibung

### Stand der Technik

Die vorliegenden Erfindung betrifft ein Anzeigeinstrument, welches in der Form eines Kombiinstrumentes oder in der Form eines Zentraldisplays für die Instrumententafel eines Kraftfahrzeuges ausgebildet ist. Es hat eine Displayeinrichtung, die beispielsweise bei einem analogen Kombiinstrument als Ziffernblatt für eine Zeigeranzeige oder bei einem Zentraldisplay als LCD-Anzeige ausgeführt sein kann. Ferner weist das Anzeigeinstrument zur Bedienung mindestens einen Stellknopf auf, über den bestimmte Funktionen des Anzeigeinstruments aktiviert werden können. Bei einem Zentraldisplay kann es sich hierbei beispielsweise um einen Stellknopf zur Rückstellung des Tages-Kilometerzählers oder um einen Drehknopf zur Dimmung der Beleuchtung der Displayeinrichtung handeln. Zur Beleuchtung der Displayeinrichtung weist das Anzeigeinstrument mindestens eine Lichtquelle auf, die in einem hinter der Displayeinrichtung liegenden Bereich angeordnet ist, um die Displayeinrichtung von hinten zu beleuchten. Derartige Kombiinstrumente und Zentraldisplays sind an sich hinreichend bekannt, sodass sie hier nicht näher beschrieben werden müssen.

Um die Bedienknöpfe des Anzeigeinstruments auch bei Dunkelheit besser finden zu können, ist es bekannt, hierzu zusätzlich zu den Lichtquellen zur Beleuchtung der Displayeinrichtung separate Leuchtmittel in dem Anzeigeinstrument vorzusehen, mit denen die Stellknöpfe bei Bedarf beleuchtet werden können.

Aus der Druckschrift DE 100 11 800 A1 ist eine Beleuchtungsvorrichtung zur Beleuchtung von Bedienelementen bekannt, bei der ein mit Reflexionsflächen versehener Lichtleiter angeordnet ist, um das Licht von einer nur zu diesem Zweck vorgesehenen Lichtquelle in Richtung des Bedienelementes umzulenken.

Ferner ist aus der Druckschrift EP 0 884 525 A2 eine integrierte Lichtleit-Platte bekannt, die in einem Mobiltelefon mit nur begrenzter Akkukapazität eingebaut wird, um sowohl das Anzeigefeld als auch die als Drucktasten ausgebildeten Bedienungstasten des Mobiltelefons mit nur einer einzigen LED beleuchten zu können.

Außerdem ist aus der Druckschrift DE 31 45 264 C2 eine Beleuchtungsanordnung für in einer Frontplatte eines Gehäuses angeordnete Bedienungsknöpfe bekannt, bei der ein Lichtleitelement so innerhalb der Bedienungsknöpfe angeordnet ist, dass darin vorgesehene Symbole ebenso wie die in der Frontplatte des Gehäuses unveränderlich angeordneten Symbole von einer gemeinsamen Lichtquelle beleuchten zu können.

### Offenbarung der Erfindung

Aufgabe der vorliegenden Erfindung ist es, ein verbessertes Kombiinstrument oder Zentraldisplay für ein Kraftfahrzeug zu schaffen, das bei einfacher und kostengünstiger Konstruktion eine Beleuchtung vorhandener Stellknöpfe ermöglicht, ohne hierfür separate Leuchtmittel vorzusehen.

Diese Aufgabe wird durch ein Anzeigeinstrument nach Anspruch 1 gelöst.

### Vorteile der Erfindung

Die der vorliegenden Erfindung zugrundeliegende Idee besteht darin, dass die zur Beleuchtung der Displayeinrichtung des Anzeigeinstruments vorhandene Lichtquelle gleichzeitig auch noch zur Beleuchtung von einem oder mehreren Stellknöpfen genutzt werden kann, die zur Bedienung des Anzeigeinstruments vorgesehen sind. Auf diese Weise kann auf zusätzliche Leuchtmittel zur Beleuchtung der Stellknöpfe verzichtet werden, was eine deutlich kostengünstigere Ausführungsform der bisher bekannten Kombiinstrumente oder Zentraldisplays für Kraftfahrzeuge ermöglicht.

Ein weiterer Vorteil der erfindungsgemäßen Lösung besteht darin, dass auf diese Weise auf die bei den bisher bekannten Anzeigeinstrumenten zur Beleuchtung der Stellknöpfe mit separaten Lichtquellen nicht nur diese zusätzlichen Lichtquellen selber, sondern auch der dafür benötigte Vorwiderstand, der Treiber, die Steuerung der Helligkeit über einen Dimmer und vor allem der hierzu benötigte Platz auf der Leiterplatte (PCB) eingespart werden kann, was im Bereich von Kraftfahrzeugen von besonderer Bedeutung ist.

Vorteilhafte Weiterbildungen und Verbesserungen des erfindungsgemäßen Anzeigeinstrumentes ergeben sich aus den abhängigen Ansprüchen.

So ist es beispielsweise besonders günstig, wenn das Lichtleitelement sich zumindest mit einem Teilbereich in einen Zwischenraum erstreckt, welcher zwischen der Displayeinrichtung und der zu ihrer Beleuchtung vorgesehenen Lichtquelle liegt.

Vorzugsweise besteht das Lichtleitelement hierbei durch ein transparentes oder zumindest teiltransparentes Kunststoffelement, welches einen Teil des von der Lichtquelle ausgesandten Lichtes aufnimmt und zum Stellknopf weiterleitet, und dabei gleichzeitig auch eine ausreichende Lichtmenge zur Beleuchtung der dahinter liegenden Displayeinrichtung durchlässt, so dass es nicht zu Beeinträchtigungen einer möglichst gleichmäßigen Ausleuchtung der Displayeinrichtung kommt. Vorteilhafterweise kann das Lichtleitelement dabei auch derart ausgebildet sein, dass auf seiner Oberfläche auftreffendes Licht an mindestens einer Seitenkante austritt. Derartige lichtsammelnde und lichtleitende Kunststoffe sind an sich beispielsweise unter der Marken-Bezeichnung "LISA" der Firma Bayer bekannt.

Ferner ist es besonders vorteilhaft, wenn das Lichtleitelement sich zumindest mit einem Teilbereich in den Stellknopf hinein erstreckt. So kann ein besonders effektiver Lichttransport in die gewünschten Bereiche des Stellknopfes erreicht werden.

Eine bei Dunkelheit besonders gut zu erkennende Ausführungsform und optisch besonders ansprechende Gestaltung des Stellknopfes kann dadurch erreicht werden, dass der Stellknopf zumindest teilweise eine transparente oder teiltransparente Oberfläche hat, durch die das Licht aus dem Stellknopf austreten kann. Vorzugsweise kann dabei die gesamte Oberfläche des Stellknopfes transparent bzw. teiltransparent ausgeführt sein.

Gemäß einer besonders bevorzugten Ausführungsform der Erfindung ist vorgesehen, dass der Stellknopf als drehbarer Stellknopf ausgebildet ist, wobei das Lichtleitelement einen schirmförmigen Bereich aufweist, welcher sich zumindest im wesentlichen über einen dem Drehwinkelbereich des Stellknopfes entsprechenden Winkelbereich in einen Zwischenraum erstreckt, der zwischen der mindest einen Lichtquelle und der Displayeinrichtung liegt. Vorzugsweise kann der schirmförmige Bereich des Lichtleitelements sich über den gesamten Umfang erstrecken und dabei vorzugsweise senkrecht zur Drehachse des Stellknopfes ausgerichtet sein. Zusätzlich kann der Stellknopf in an sich bekannter Weise auch noch als Druckknopf ausgebildet sein, so dass eine Bedienung des Anzeigeinstrumentes sowohl durch Drehen als auch durch Drücken des Stellknopfes möglich ist. Grundsätzlich kann der Stellknopf jedoch auch in anderen Formen, beispielsweise als Druckknopf, Kippschalter oder Schiebeschalter ausgebildet sein.

Besonders vorteilhaft ist es bei einem durch Drehung bedienbaren Stellknopf ferner, wenn sich das Lichtleitelement mit einem Teilbereich koaxial zur Drehachse des Stellknopfes in diesen hinein erstreckt. So kann unabhängig von seiner Winkelstellung eine gleichbleibende Beleuchtung des Stellknopfes erzielt werden.

Zusätzlich oder alternativ wird auch vorgeschlagen, dass das Lichtleitelement derart angeordnet sein kann, dass es einen um den Stellknopf herum befindlichen Randbereich beleuchtet.

Die Vorteile der vorliegenden Erfindung machen sich besonders stark dann bemerkbar, wenn das Anzeigeelement mehrere Stellknöpfe aufweist, welche jeweils über ein eigenes Lichtleitelement von der mindestens einen Lichtquelle beleuchtet werden, die zur Beleuchtung der Displayeinrichtung des Anzeigeelements vorgesehen ist. Auf diese Weise beschränkt sich die Anordnung von Lichtleitelementen auch bei einer Mehrzahl von Stellknöpfen nur auf die Bereiche, die tatsächlich zum Leiten des Lichtes benötigt werden.

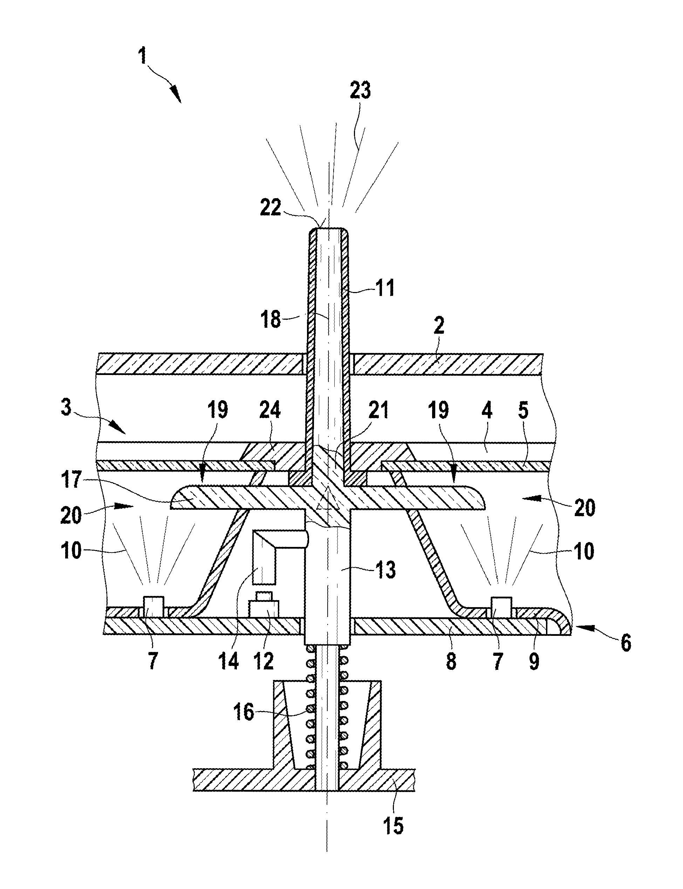

### Kurze Beschreibung der Zeichnung

In der beigefügten Zeichnung ist ein Ausführungsbeispiel der Erfindung dargestellt, welches in der nachfolgenden Beschreibung noch näher erläutert wird. Es zeigt einen Querschnitt durch einen Teilbereich eines Kombiinstrumentes mit einem darin befindlichen Stellknopf.

### Ausführungsformen der Erfindung

Das in der Figur teilweise Anzeigeinstrument 1 ist als Kombiinstrument ausgebildet, welches insbesondere hinter dem Lenkrad eines Kraftfahrzeugs in der Instrumententafel des Kraftfahrzeugs angeordnet sein kann. Es hat eine Deckscheibe 2, hinter der sich eine parallel dazu ausgerichtete Displayeinrichtung 3 erstreckt, welche ein von einem Frontrahmen 4 eingefasstes Ziffernblatt 5 aufweist. Hinter dem Ziffernblatt 5 befindet sich ein hier nicht näher dargestellter Antriebsmechansimus für einen Zeiger, welcher zur Anzeige beispielsweise der Fahrzeuggeschwindigkeit auf dem Ziffernblatt drehbar gelagert ist.

Um die Fahrzeuggeschwindigkeit auch bei Dunkelheit einwandfrei ablesen zu können, sind am Gehäuseboden 6 des Anzeigeinstruments 1 mehrere LEDs als Lichtquellen 7 vorgesehen. Der Gehäuseboden 6 umfasst eine Leiterplatte 8 und mehrere darauf in an sich bekannter Weise befindliche Reflektoren 9, in denen die LEDs angeordnet sind, um die von ihnen ausgesandten Lichtstrahlen 10 von hinten gegen das Ziffernblatt 5 lenken zu können.

In dem dargestellten Bereich befindet sich ein Stellknopf 11, der hier als kombinierter Dreh-Druckknopf ausgeführt ist. Zur Ausführung der Druckfunktion umfasst er einen auf der Leiterplatte 8 angeordneten Stelltaster 12, der von einem am Schaft 13 des Stellknopfes 11 befindlichen Ausleger 14 betätigt werden kann. In einem hinter der Leiterplatte 8 befindlichen Gehäusedeckel 15 befindet sich eine, hier nur schematisch angedeutete Stellfeder 16, durch die der Stellknopf 11 nach einer Druckbetätigung in seine Ausgangsposition zurückstellbar ist.

Erfindungsgemäß ist ein Lichtleitelement 17 vorgesehen, welches in dem dargestellten Ausführungsbeispiel in der Form einer senkrecht zur Drehachse 18 ausgerichteten Scheibe ausgebildet ist, deren Randbereiche 19 sich in den Zwischenraum 20 erstrecken, der zwischen den Lichtquellen 7 und dem Ziffernblatt 5 liegt.

Im Inneren ist der obere Bereich des Schafts 13 des Stellknopfs 11 hohl ausgebildet, und ein koaxialer Fortsatz 21 des Lichtleitelements 17 erstreckt sich durch den Hohlraum hindurch bis zu der Oberfläche 22 des Stellknopfs 11. Auf diese Weise können hier Lichtstrahlen 23 aus dem Stellknopf 11 austreten, die von den beiden primär zur Beleuchtung des Ziffernblatts 5 vorgesehenen Lichtquellen 7 erzeugt werden und über das Lichtleitelement 17 bis zur Oberfläche 22 des Stellknopfs 11 geleitet werden.

Als Variante kann auch ein auf Höhe des Frontrahmens 4 oder des Ziffernblatts 5 den Schaft 13 des Stellknopfes 11 koaxial umgebendes Ringelement 24 aus einem lichtleitenden Material bestehen, so dass der den Stellknopf 11 hier umgebende Randbereich ebenfalls durch die beiden primär zur Beleuchtung des Ziffernblatts 5 vorgesehenen Lichtquellen 7 gleichmäßig ausgeleuchtet werden kann.

In jedem Fall ergibt sich so eine besonders kostengünstige Ausführungsvariante eines zentral beleuchteten Stellknopfs eines Kombiinstrumentes.

## Patentansprüche

1. Anzeigeinstrument (1) in der Form eines Kombiinstruments oder eines Zentraldisplays für die Instrumententafel eines Kraftfahrzeugs, umfassend eine Displayeinrichtung (3) und mindestens einen Stellknopf (11) zur Bedienung des Anzeigeinstruments (1), sowie mindestens eine Lichtquelle (7) zur Beleuchtung der Displayeinrichtung (3), wobei mindestens ein Lichtleitelement (17) vorgesehen und derart angeordnet ist, dass zumindest ein Teilbereich (22) des Stellknopfes (11) durch das von der mindestens einen Lichtquelle (7) erzeugbare und von dem Lichtleitelement (17) weiterleitbare Licht (10) beleuchtbar ist.

2. Anzeigeinstrument (1) nach Anspruch 1, **dadurch gekennzeichnet, dass** das Lichtleitelement (17) sich zumindest teilweise in einen zwischen der mindestens einen Lichtquelle (7) und der Displayeinrichtung (3) erstreckenden Zwischenraum (20) erstreckt.

3. Anzeigeinstrument (1) nach Anspruch 2, **dadurch gekennzeichnet, dass** das Lichtleitelement (17) durch ein transparentes oder teiltransparentes Kunststoffelement gebildet ist.

4. Anzeigeinstrument (1) nach einem der vorherigen Ansprüche, **dadurch gekennzeichnet, dass** das Lichtleitelement (17) sich mit einem Teilbereich (21) in den Stellknopf (11) hinein erstreckt.

5. Anzeigeinstrument (1) nach Anspruch 4, **dadurch gekennzeichnet, dass** der Stellknopf (11) eine transparente oder teiltransparente Oberfläche hat.

6. Anzeigeinstrument (1) nach Anspruch 2, insbesondere in Kombination mit einem der Ansprüche 3 bis 5, **dadurch gekennzeichnet, dass** der Stellknopf (11) als drehbarer Stellknopf ausgebildet ist, wobei das Lichtleitelement (17) einen schirmförmigen Bereich (19) aufweist, der sich zumindest annähernd über einen dem Drehwinkelbereich des Stellknopfes (11) entsprechenden Bereich in einen zwischen der mindestens einen Lichtquelle (7) und der Displayeinrichtung (3) erstreckenden Zwischenraum (20) erstreckt.

7. Anzeigeinstrument (1) nach Anspruch 4 und 6, **dadurch gekennzeichnet, dass** sich das Lichtleitelement (17) koaxial zur Drehachse (18) des Stellknopfes (11) in den Stellknopf (11) hinein erstreckt.

8. Anzeigeinstrument (1) nach einem der vorherigen Ansprüche, **dadurch gekennzeichnet, dass** das Lichtleitelement (17) derart angeordnet ist, dass **dadurch** ein um den Stellknopf (11) herum befindlicher Randbereich beleuchtbar ist.

9. Anzeigeinstrument (1) nach einem der vorherigen Ansprüche, **dadurch gekennzeichnet, dass** es mehrere Stellknöpfe (11) aufweist, die jeweils über ein eigenes Lichtleitelement (17) von der mindestens einen Lichtquelle (7) zur Beleuchtung der Displayeinrichtung (3) beleuchtbar sind.
